# EUROPEAN PATENT SPECIFICATION

(11) **EP 1 518 460 B1**
(45) Date of publication and mention of the grant of the patent: **05.07.2006**
(21) Application number: 03380213.3
(22) Date of filing: 29.09.2003
(51) Int. Cl.: A22B 5/16

(54) **Animal skinning machine**
Tierenthäutungseinrichtung
Installation pour écorcher les animaux

(43) Date of publication of application: 30.03.2005
(73) Proprietor: Vives I Queralto, Joan, 08700 Igualada (Barcelona) (ES)
(72) Inventor: Vives I Queralto, Joan, 08700 Igualada (Barcelona) (ES)
(74) Representative: Manresa Val, Manuel

(56) References cited:
- EP-A- 0 104 117
- EP-A- 0 894 437
- CH-A- 197 852

## Description

Animal skinning machine of the type that includes an animal feeder and a skin remover device that includes an initial tail separator of the animal to be skinned that consists in a separating rotor, formed by a base, a central axis, as a support, at least two projections, equidistant to each other, shared in common to the referred base, and at least two fins, positioned in the free spaces existing between these projections, and simultaneously shared in common to the base, a first guide bar, parallel with respect to the mentioned central axis, and in the side where the animals will run to skin, a second guide bar, shared in common to a bottom hinged arm-support, positioned in the lateral and in the side where the animals will run to skin, and to a predetermined distance of the rotor, being this distance enough for the entrance of the animal, and a motor of the separating rotor.

### BACKGROUNDS OF THE INVENTION

It is known in the state of the art different patents that they make reference to skinning machines for animals.
Thus, it is known the Spanish Utility Model n° 9303153 (1026412), in 1993, in the name of MATADERO DE CONEJOS JUSTO, S.L. that comprises an installation to skin rabbits, characterized because it is constituted by a set of two chains incorporated in movable assembly with a tangent longitudinal section, going these chains in a positioning lined below one carrier of a set of sliding supports altogether throughout the same one, which ones are provided with subjection elements for hanging the animals to skin, so that beginning the skinning process, the animal hanging skin is blocked in the transfer between the movable chains, taking place the total skinning of the same one according to the advancing movement.

The same inventor invented in 1994 a Utility Model in Spain, which was registered under the number 9402664 (1029245), that consisted of a hanger for transporting the slaughtered animals, with the purpose to hang them from a transporting chain by their back legs, characterized essentially by the fact that it consists of a bent rod similar to an inverted "V" of divergent branches towards its lower ends, that present individual sections bent upwards similar to "U" or, in that the ends of the back legs of the animal are introduced, that it remains hung below the knees being the width of the sections in or something greater than the end of the back legs and smaller than the knees of the animal.

The same inventor also invented the Spanish Patent n° 9601347 (2129327), of 1996 that consists of Device for removing skin from the legs of slaughtered animals. It comprises gearing formed by two toothed wheels, one of these being associated with actuation means and removing the skin when said skin is clamped between the two-toothed wheels. It is characterised in that the toothed wheels are conical (crown wheels) with variable-modulus helical toothing. Between the shafts of the aforesaid toothed wheels are interposed elastic means, which allow a slight displacement of one of the wheels with respect to the other. It requires no supply of water for cooling the bearings, since the dimensions of the bearings are sufficiently large to not require cooling and it requires less maintenance. It involves costs for manufacturing the device, which are substantially lower than for known devices as it has a single gearing.

Also it is known, in 1994, the Spanish Patent n° 9401566 (2080696), in the name of D. Manuel Foglietti Martinez, that comprises skinning (flaying) installation for animal slaughterhouses. The installation has multiple columns aligned under the chain for transporting the animals, each column supporting a vertically displaceable head carrying a clamp for holding the skin in the high displacement position of the head in order to allow skinning during downward travel, in combination with a cutter whose actuation is coordinated with the head, intended to detach the animal's skin from its fats

In the state of the art there is also the Patent US4099294, of 1977, in the name of Mr. Gilbert Taber, a method of removing hides or pelts from small animals. The skinning is begun in the usual manner by making incisions along the inside of each hind leg and peeling a short section of hide away from the hindquarters. The skinning is performed with the aid of a pair of rigid plate members, one of which is anchored in a fixed position, and both of which have openings through which the animal's body may pass. The short section of hide is wrapped around the movable plate and firmly engaged between the movable and fixed plates with the hind legs extending through the aligned openings. The carcass is pulled through the openings as the hide is stripped away due to its engagement between the stationary plates.

Finally it is also known the European Patent n° 0104117, of 1982, in the name of the company SAFO SOC that consists of a machine to be integrated into a slaughter line of the type comprising an overhead conveyor carrying the slaughtered animals to different workstations, and is basically characterised in that it comprises means for pulling the skin off the animal, at least one means for detecting the position of the skin relative to the pulling means, at least one control unit for starting the pulling means validated by the detection means, at least one means for guiding the skin towards the pulling means, at least one means for analysing the force applied to the skin during dehiding and at least one electronic circuit for controlling the stopping of the pulling means and releasing the skin on the basis of data transmitted by the analysis means in order to interrupt the dehiding operation when the size of the pulling force may cause the skin to tear.

### BRIEF DESCRIPTION OF THE INVENTION

The present invention is a considerable advance in the sector of the skinning machines for animals, since it saves long time as a consequence of its high speed of work, offering in addition a great amount of safety measures that makes it very reliable and very safe for the workers who are handling it, being in addition very easy to put into operation and to work with it by its great versatility, being this a reason why it is ideal for all type of companies, of big size or small size.

One of the great disadvantages of the machines were referred in the backgrounds of the invention are the great amount of personnel or workers that it is necessary to employ to carry out the skinning of the animal, specially the hard work that supposes to be lowering the skins until down so that the machine finishes the skinning.

Another one of the great disadvantages is the difficulty to take benefit of the totality of the skins, since said machines, when they stretch the skin they damage them and they ruin them.

Also, there is the disadvantage that, in the machines that include belts, specially chain-type, ruin the skins, damage them in such a way that later the owner cannot be taken advantage of them, and it causes a lost of benefits for the proprietor.

To all the indicated problems and disadvantages previously mentioned it is necessary to add the problem of the synchronization of the belt, due to the necessity to use two motors, one by belt.

Thus, the present invention has solved all the problems previously indicated, having invented a revolutionary machine in its sector.

The machine according to claim 1 is formed by a an initial tail separator of the animal to be skinned that consists in a separating rotor, that by means of the fins and the projections can catch the tail of the animal, later by means of the turn to separate it of the body of the animal and prepare it for the entrance in the intermediate mechanism or the skin remover device.

This initial mechanism allows the total automatization of the skinning of the animals, since these can come by means of a feeder, consisting for example in a distribution line, from which these animals are entering in the initial mechanism in order that later, when coming out of the skin remover device, to continue the referred animals in the same feeding line, but now without skin.

It is easily to see that only a worker will be necessary to control the entire device, in the case any type of failure could exist, but this worker does not need to be lowering the skins of the animals, as it happened in the relation of patents indicated in the backgrounds of the invention.

In order to facilitate the capture of the animal tail by the projections and the fins, a first guide bar has been foreseen, in the side where the animals will run to skin, that makes easy the separation of the animal once the tail of this one has been captured by the projections and the fins, since they avoid the approach of this one motivated by the pull caused by the capture of the tail. This bar is placed in a higher position than the rotor since it separates the upper part of the animal.

The second guide bar is shared in common to an arm-support that is hinged in the lower part, with a return spring. This bar is in the lateral, in the same one that the animals run, with the mission to push them towards the rotor and to force their capture. This bar is positioned to an equal or relatively equal height to which is the rotor, because the intention is to approach the lower part of the animal towards the machine.

On the other hand, as it has been mentioned in the previous paragraphs, one of the indirect businesses of the skinning of animals consists on the later sale of the skins. But these skins must be intact, because if not they are not valid.

Also the inventor has managed to synchronize all the belts of the machine with a single motor, that puts into operation one of the belts and successively others are crawled ones to the others, in such a way that the problem before indicated of the synchronization of motors disappears.

This synchronization is important to avoid damages in the skins, because if one of the belts goes faster than another one, it tweaks and rips the skin of the animal that makes it unsuitable for their later commercialization.

At the same time the use of an only motor supposes a considerable power saving, since only the energy of one motor is spent, which causes a reduction in the production costs.

Obviously, it is not necessary to have a person taking care if non-synchronization of the belt has been produced or, because said belts are always synchronous.

The present invention has a system of tooth belt, in a material of the group of polyamides, with inner reinforcements as for example wires, in such a way that at any moment the skin is not scarred by the belt, since these have a certain degree of elasticity at the same time that they compress, avoiding the indicated negative effect before mentioned.

In addition, the way as the skin is stretched, with an initially thinner belt in the intermediate mechanism and later another wider belt in the skin extractor machine, makes easier that the skin is captured in the mechanism and still stretches the skin in the animal downwards.

In addition due to its simplicity, it is a machine that can be controlled by a single worker, causing a great saving in the costs of personnel and that in the long run, due to its simplicity, must give very few repairs to its user.

### BRIEF DESCRIPTION OF THE DRAWINGS

And in order to facilitate the explanation, it is attached to the present description twelve sheets of drawings where they are shown an embodiment, only as illustrative and non-limitative example, in which:
- Figure 1 is a perspective view of the skinning machine object of the present invention in operation.
- Figure 2 is a perspective view from behind of the skinning machine in operation.
- Figure 3 is a view from above of the skinning machine in operation.
- Figure 4 is a perspective view of the skinning machine with covers or armoured decks, stopped.
- Figure 5 is a perspective view of the skinning machine, like the figure 4, but without covers or armoured decks, and stopped.
- Figure 6 is a view of the rotor mechanism.
- Figure 7 is a lateral partial perspective view of the rotor mechanism.
- Figure 8 is a lateral partial perspective view of the rotor mechanism, in operation with the animal in phase of hooking.
- Figure 9 is a frontal perspective view of the skin remover device, stopped, with the covers or armoured decks.
- Figure 10 is a frontal perspective view of the skin remover device, stopped, without the covers or armoured decks.
- Figure 11 is a front view of the rotor and the intermediate mechanism, stopped, with the covers or armoured decks.
- Figure 12 is a front view of the rotor and the intermediate mechanism, stopped, without the covers or armoured decks.

### CONCRETE EMBODIMENT OF THE INVENTION

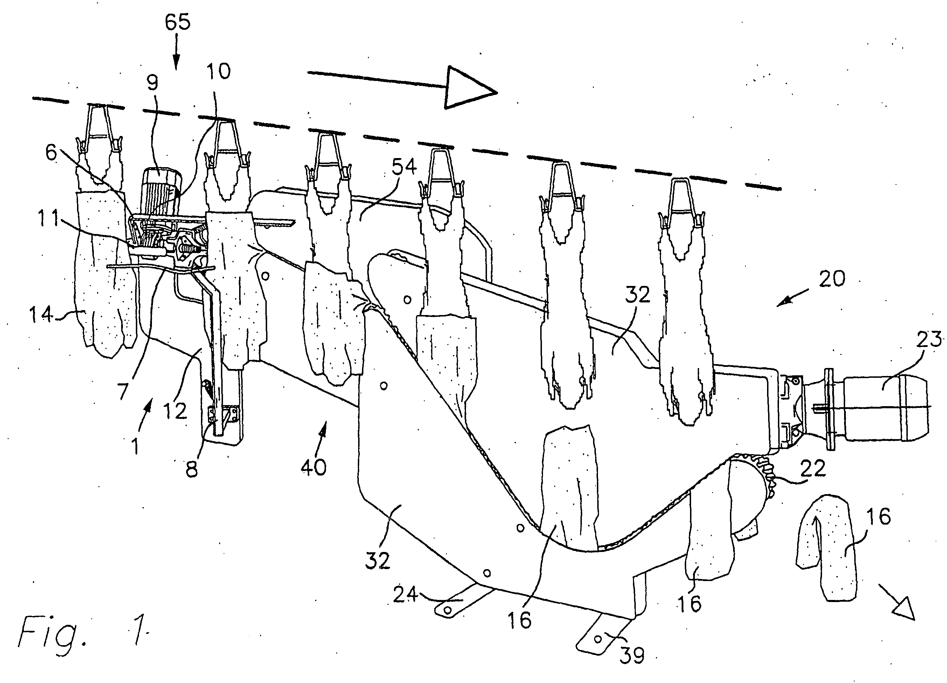

Thus in figure 1 it is observed a feeder 65, the initial mechanism 1, the intermediate mechanism 40 and the skin remover device 20, and in addition a first guide bar 6, a second guide bar 7, an arm-support 8, a motor 9, a rotor 10, a third guide bar 11, animals 14, a cover or armoured deck 12, covers or armoured decks 54, feet 24,39, a cover or armoured deck 32, a already separated skin 16, a motor 23 and a belt 22.

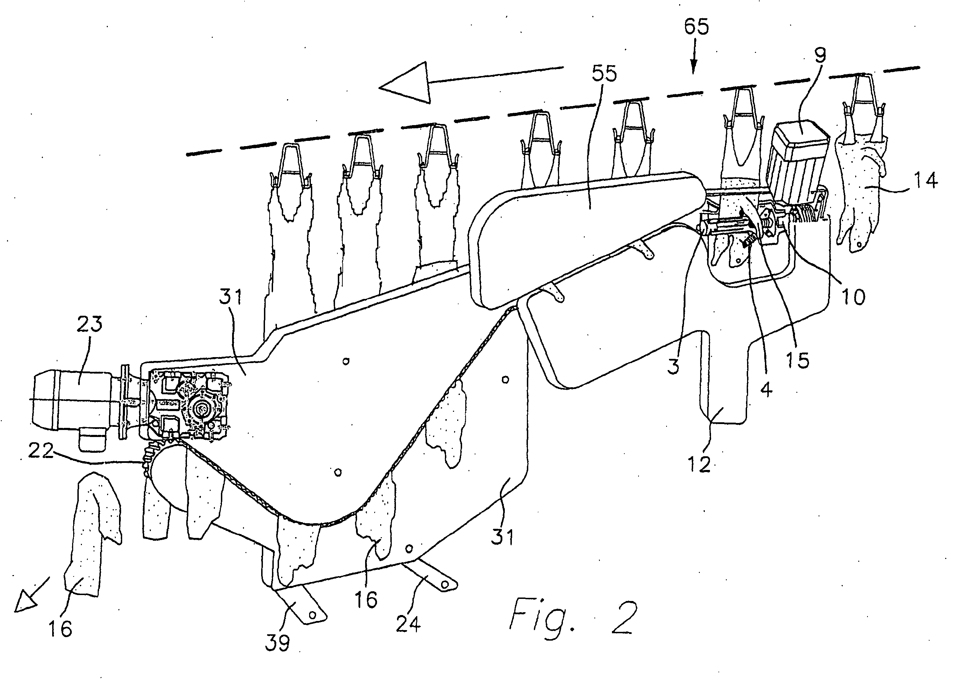

In figure 2 it is illustrated the referred feeder 65, the motor 9, the rotor 10, with their axis-support 3, projections 4, the animals 14, a tail 15, the cover or armoured deck 12, a cover or armoured deck 55, the feet 24,39, the skin already separated 16, the motor 23 and the belt 22, as well as covers or armoured decks 31 of the skin remover device.

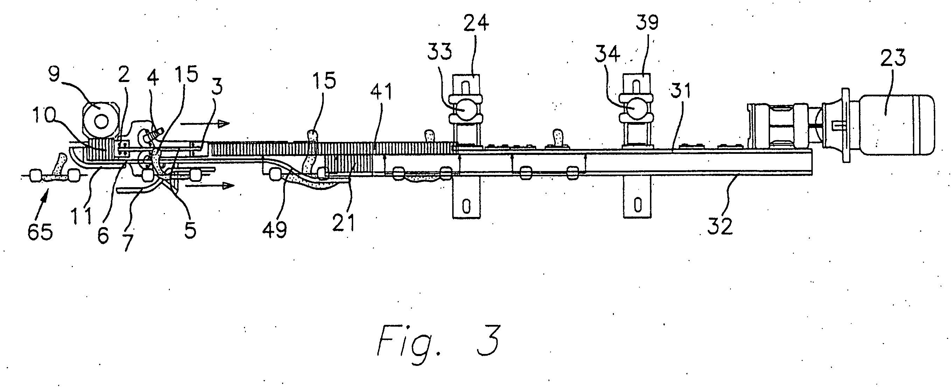

The feeder 65, the rotor 10, the motor 9, the third guide bar 11, the base 2, the central axis 3, the projections 4, the fins 5, the first guide bar 6, the second guide bar 7, the tail 15, a fourth guide bar 49, a toothed belt 41, a belt 21, posts 33,34, with their respective feet 24,39, the covers or armoured decks 31,32 and the motor 23, are represented in figure 3.

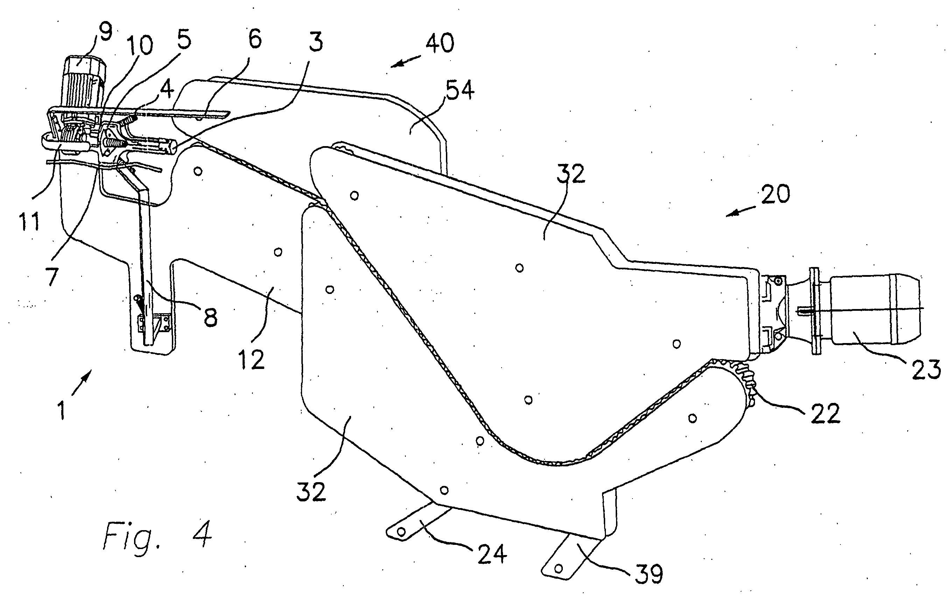

In figure 4 it is shown the initial separator mechanism 1 with the rotor 10, the motor 9, the third guide bar 11, the central axis 3, the projections 4, the fins 5, the first guide bar 6, the second guide bar 7, the arm-support 8, the cover or armoured deck 12, the intermediate mechanism 40, the cover or armoured deck 54, the skin remover device, the feet 24,39, the covers or armoured decks 31,32, the belt 22 and the motor 23.

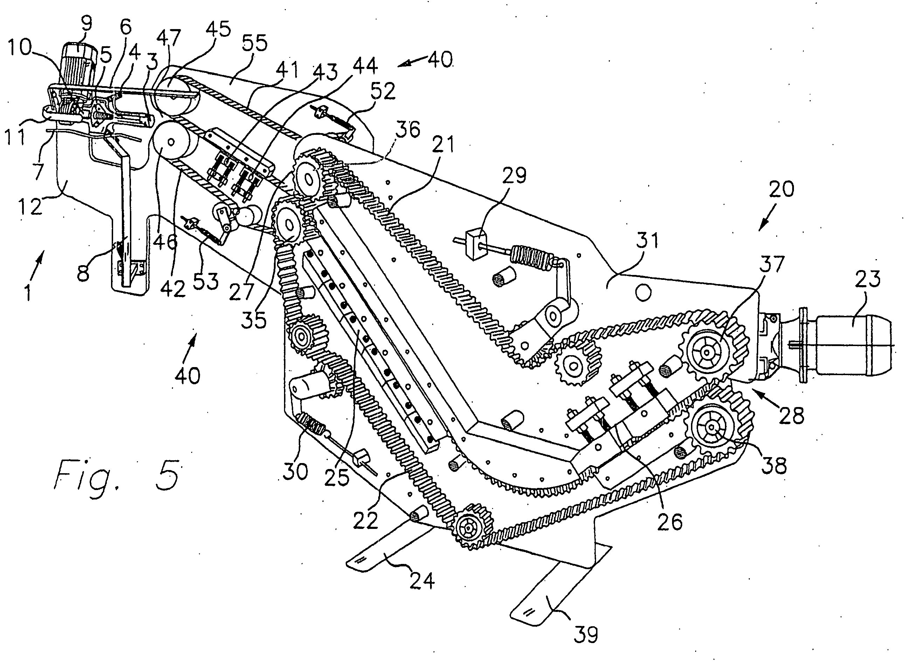

In figure 5 it has been drawn the initial separating mechanism 1 with rotor 10, motor 9, third guide bar 11, central axis 3, projections 4, fins 5, first guide bar 6, second guide bar 7, arm-support 8, the cover or armoured deck 12, the intermediate mechanism 40, intermediate belt 41,42, shock absorbers 43,44, an entrance 47, entrance pinions 45,46, exit pinions 50,51, spring links 52,53, the cover or armoured deck 55, the skin remover device 20, belt 21,22, motor 23, feet 24,39, shock absorbers 25,26, an entrance 27, an exit 28, spring links 29,30, entrance pinions 35,36, the cover or armoured deck 31 and exit pinions 37,38.

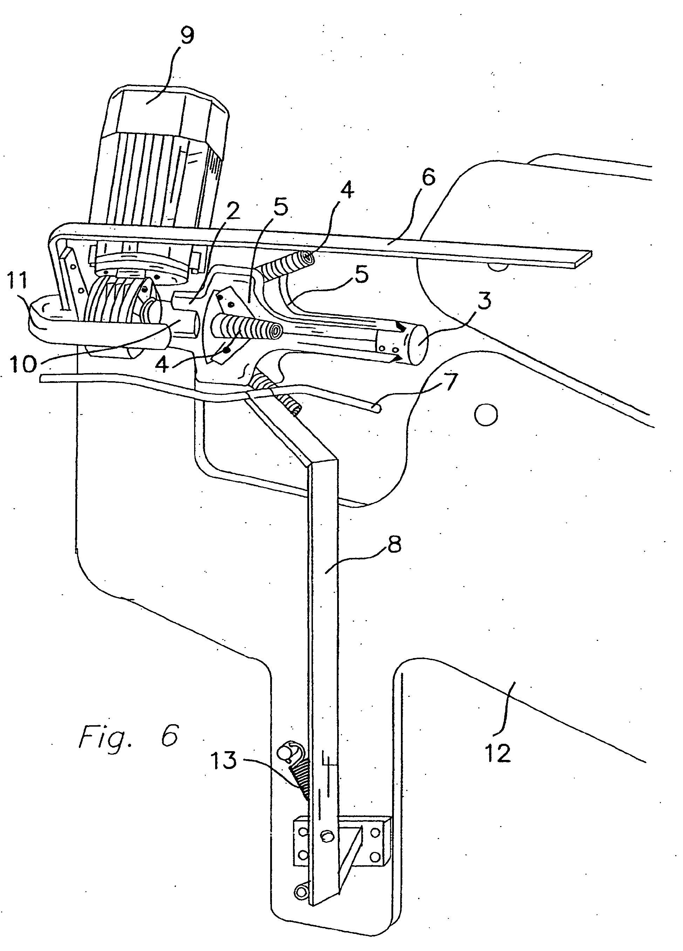

Figure 6 represents the initial separating mechanism with rotor 10, motor 9, third guide bar 11, base 2, central axis 3, projections 4, fins 5, first guide bar 6, second guide bar 7, arm-support 8, a return spring 13 and the cover or armoured deck 12.

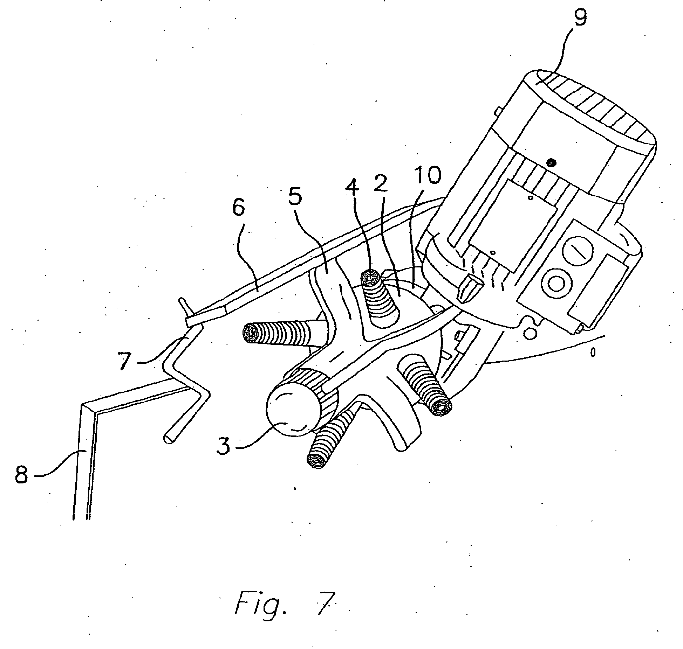

Figure 7 illustrates the initial separating mechanism with rotor 10, motor 9, base 2, central axis 3, projections 4, fins 5, first guide bar 6, second 7 guide bar and arm-support 8.

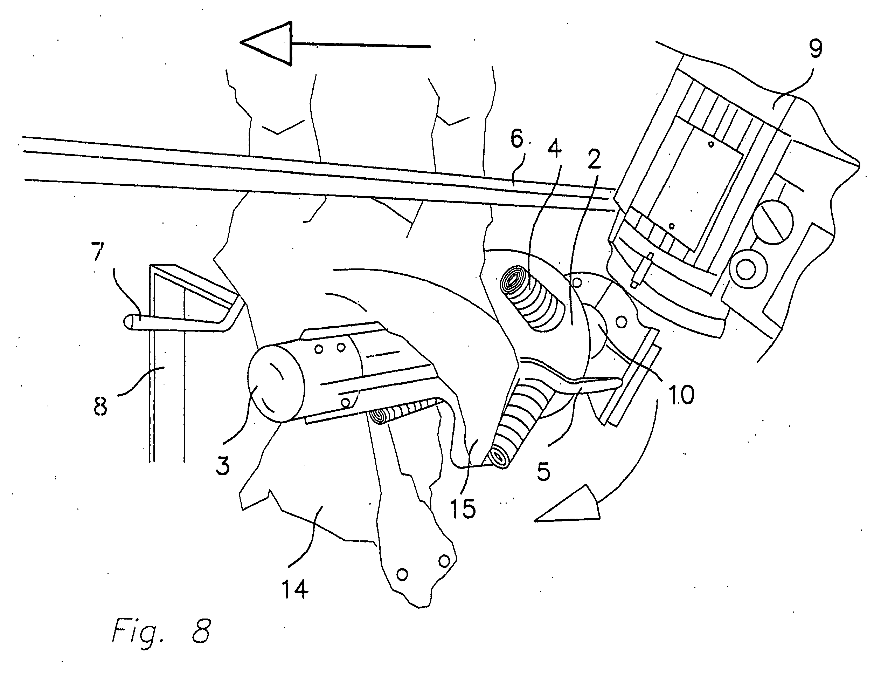

The initial separating mechanism, with animal 14, tail 15, with rotor 10, motor 9, base 2, central axis 3, projections 4, fins 5, first guide bar 6, second 7 guide bar and arm-support 8 has been drawn in figure 8.

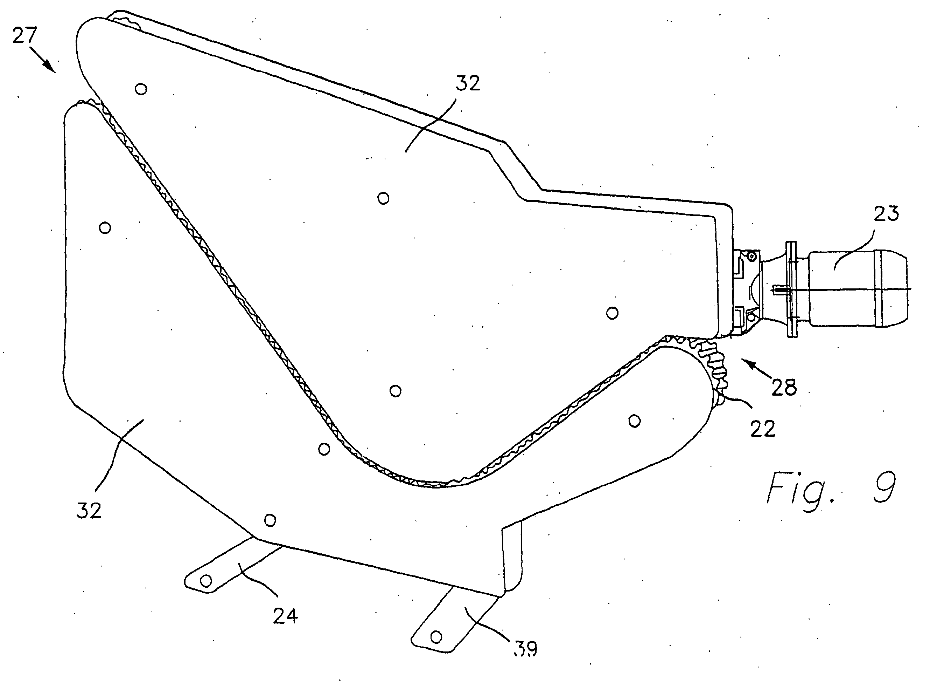

In figure 9 is shown the skin remover device with its entrance 27 and its exit 28, its covers or armoured decks 32, feet 24,39, belt 22 and motor 23.

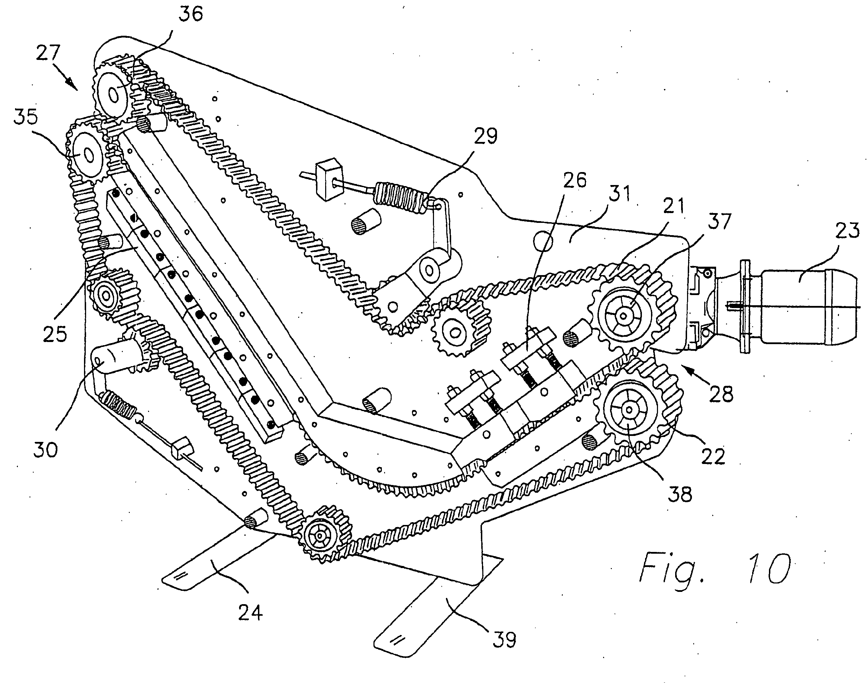

Figure 10 has represented the skin remover device with belts 21,22, motor 23, feet 24,39, shock absorbers 25,26, an entrance 27, an exit 28, spring links 29,30, entrance pinions 35,36, the cover or armoured deck 31 and exit pinions 37,38.

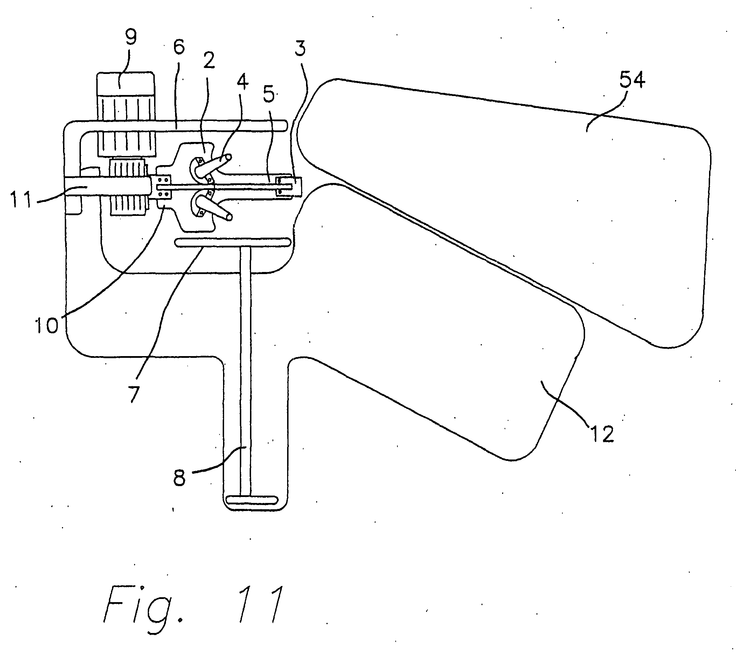

In figure 11 it is referenced the initial separating mechanism and the intermediate mechanism, with the rotor 10, motor 9, third guide bar 11, base 2, central axis 3, projections 4, fins 5, first guide bar 6, second guide bar 7, arm-support 8, the cover or armoured deck 12 and the cover or armoured deck 54.

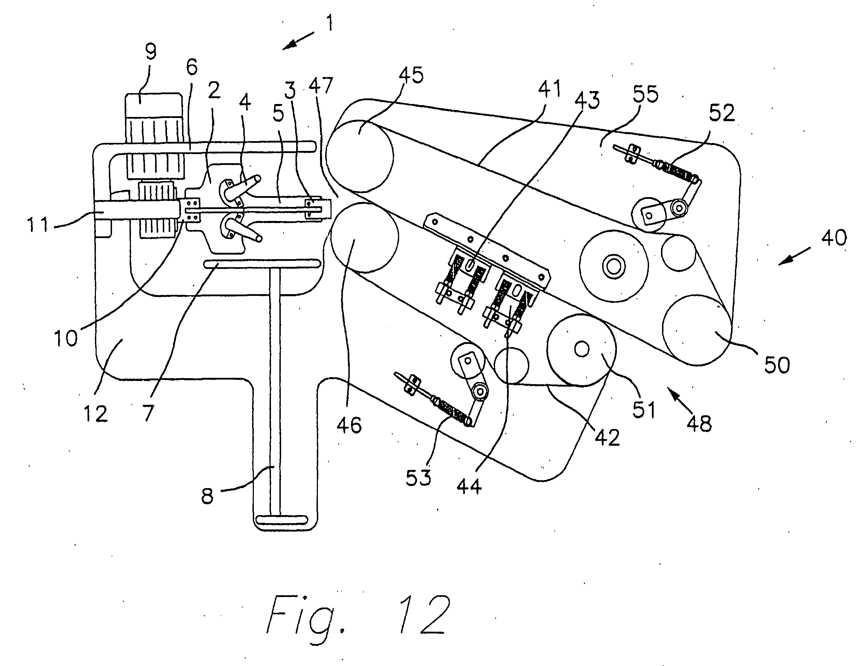

Finally, in figure 12 it has been illustrated the initial separating mechanism 1, with rotor 10, motor 9, third guide bar 11, central axis 3, projections 4, fins 5, first guide bar 6, second guide bar 7, arm-support 8, the cover or armoured deck 12, intermediate mechanism 40, intermediate belts 41,42, shock absorbers 43,44, an entrance 47, entrance pinions 45,46, exit pinions 50,51, spring links 52,53 and the cover or armoured decks 55.

Previous to put into operation the machine object of the present invention, depending on the animal to skin and its size, it will be made the last adjustments to the machine by means of the spring links 29,30 and shock absorbers 25,26 of the skin remover device 20, and the spring links 52,53 and shock absorbers 43,44 of the intermediate mechanism 40.

When the worker of the machine puts into operation the skin remover device 20, by means of the motor 23, this one (the motor) puts into operation the belt 21, that is toothed, dragging the belt 22 and putting it in operation, which begins to turn.

The pinions 36,35 that flank the entrance 27 of the skin remover device 20, are joined to the pinions 50,51, respectively, that flank the exit 48 of the intermediate mechanism 40, by means of the intermediate gearboxes (not illustrated in the drawings), in such a way that the movement of pinions 36,35 is transmitted to pinions 50,51, and belt 41,42 are put into operation.

Considering that they are toothed belts, it would solely be necessary one of these intermediate gearboxes, since when transmitting the movement to one of the belts of intermediate mechanism 40; it is transmitted directly to the other.

Later the motor 9 is put into operation which pertains to the initial separating mechanism 1 that (motor) rotates rotor 10, and consequently base 2, central axis 3, the projections 4 and fins 5.

This motor 9 or means for driving the rotor 10 is joined to this rotor in the opposed side to the one of the entrance of animal 14 to be skinned, to avoid that the animal 14 crashes with motor 9 at the moment it (the animal) arrives at the initial separating mechanism 1.

For this embodiment it has been illustrated a rotor 10 with four projections 4 and four fins 5 although depending on the size of the base 2 this amount can vary, always from a number of two projections and two fins. Projections 4 are elastic and/or flexible, equidistant to each other, shared in common to referred base 2, in such a way that they allow a greater adaptability to the tail 15 of the animal to block. These projections 4 are interchangeable, in such a way that in case that by the use some of them were damaged it would be possible to change them without any problem. The projections can have spiral form or to adopt the drawing of a succession of rings around the axis of the projection.

In addition fins 5 are positioned in the free spaces existing between said projections 4, and simultaneously shared in common to base 2 and like the projections 4, these can be interchangeable in case of their wearing.

The feeder 65 provides the animal 14 to be skinned with the tail 15 orientated towards the axis support 3.

The animal 14 hung mouth down, for example a rabbit, when approaching initial separating mechanism 1 runs into first guide bar 6, located more above than the axis-support 3, that slightly pushes the body towards the outside, as well as makes the same the third guide bar 11, but at the same time the second guide bar 7, located approximately to the same height that the axis-support 3, forces that the trunk of the animal approaches to the rotor 10, for this purpose it has a hinged arm 8 and a return spring 13 that adapts to the size of the animal 14.

First guide bar 6 is parallel or with a certain degree of parallelism with respect to mentioned central axis 3, and it is located in the side where animals 14 will run to be skinned. On the other hand this guide bar is shared in common to the rotor 10.

Second guide bar 7 is shared in common to the arm-support 8, upper hinged, that has the return spring 13, being positioned this second guide bar 7 in the lateral and in the side where animals 14 will run to skin, and to a predetermined distance of the rotor 10, being this distance enough for the entrance of animal 14 to skin. The form of the alluded second guide bar 7 depends on the lateral silhouette of the rotor 10 to which this guide bar 7 outlines in the distance, being initially opened to facilitate that the animal can be guided by the inner part of said second guide bar 7.

At the same time, at least the rotor 10 and the set formed by the second guide bar 7 and the arm-support 8 are joined to a same cover or armoured deck 12.

Tail 15 is hit by the fins 5 that separate it and raise it in order that the projections 4 jointly block it with the axis-support 3 at the moment in which the turn is made, in such a way that they keep this tail 15 duly stretched for its later entrance in the intermediate mechanism 40 or in the skin remover device 20.

The direction of rotation of the rotor will depend on how initial separating mechanism 1 is arranged, if it is designed so that the animals enter by the left side of the axis-support 3 (since it has illustrated in the drawings), the turn must be in the same direction of the hands of the clock (fig 8), if it was designed so that the animals enter by the right side of the axis-support 3, the turn must be in the opposite direction to the hands of the clock.

Thus animal 14, with the tail 15 separated to the body (not sectioned of the body), by means of the feeder 65 is moved until the entrance 47 of the intermediate mechanism 40, and said tail 15 is captured between the belts 41,42 that have an inclination downwards, which it causes that they are stretching the skin of the animal downwards and animal 14 is skinned as it is moved through the intermediate mechanism 40.

It is necessary to indicate that the width of the belts 21,22 of the skin remover device 20 is broader than the belts 41,42 of intermediate mechanism 20. For that reason, before arriving animal 14 at the skin remover device 20, a fourth guide bar 49 has been foreseen (figure 3), that separates the body of the animal, in such a way that it adapts the animal to the width of the belts 21,22 of the skin remover device 20.

This difference of width between belts is justified by the fact that so it is allowed that the skin remover device 20 has a greater surface of animal skin to allow stretching downwards the rest of the skin of the animal in its body.

Once the animal enters in the skin remover device 20, by means of the entrance 27, this one follows a route between referred belts 21,22 in the direction of the floor, since taking into account that the feeder keeps firmly the animal feet, when the belts 21,22 stretch downwardly the skin 15, it allows that definitively the animal is totally skinned. Later the belts 21,22 change the direction, upwardly, until a predetermined height that will be higher than the height of the container (not illustrated) where to put the skin 16.

Shock absorbers 25,26,43,44 have the mission to allow to the operation of the machine independently of the size of the animals, as well as to allow the possibility of having more than one operative animal within the machine at the same time.

In order to improve the stability of the machine, feet 24,39 have been incorporated, as well as posts 33,34 can be connected (fig.3) to allow the regulation of the machine in height and, for example, to give greater versatility to the machine since if the machine rises at the end can be placed a container of greater capacity for the skins.

In order to protect the mechanisms from the dust, the hairs of the animals and to increase the benefits of security of the machine, it has been foreseen to position covers or armoured decks 31,32,54,55, especially in those areas where there are belts 21,22,41,42. In this particular embodiment, the initial separating mechanism 1 and intermediate mechanism 40 share one of the covers or armoured decks 12, because by the front part it is believed that it is not necessary the same as a result of the existence of the first guide bar 6 and the second guide bar 7, that would avoid the possible accidental introduction of the hands inside the mentioned mechanisms, initial separating 1 and intermediate 40.

Belts 21,22,41,42 are made of a polymer, for example nylon, with steel threads in their inner part. It means several advantages. From one hand it confers to belts 21,22,41,42 a great flexibility, and at the same time gives them the necessary rigidity and consistency thanks to the steel threads. It means that with the before alluded shock absorbers 25,26,43,44, this machine has the possibility of skinning different animals from different sizes and to load several animals at the same time, because the belts 21,22,41,42 and the shock absorbers 25,26,43,44 individually adapt each animal 15.

Also, the fact that they are flexible, these belts 21,22,41,42 do not damage the skin 15 of the animal, because the belts hold, stretch and block the skin but without nailing in them and therefore, without damaging them, being able, then, to be reused.

In addition, the steel cables confer solidness to resist the longitudinal pulls that could have the belts 21,22,41,42.

The present patent describes a new animal skinning machine. The examples here mentioned are not limitative of the present invention, for that reason it will be able to have different applications and/or adaptations, all of them within the scope of the following claims.

In order to facilitate the understanding and the monitoring of the description a numerical legend is attached as follows:
1. Initial separating mechanism
2. Base
3. Central axis
4. Projections
5. Fins
6. First guide bar
7. Second guide bar
8. Arm-support
9. Motor
10. Rotor
11. Third guide bar
12. Cover or armoured deck
13. Return spring
14. Animal
15. Tail
16. Skin
17. Skin remover device
18. Belt
19. Belt
20. Driving means or motor
21. Foot
22. Shock absorber
23. Shock absorber
24. Entrance
25. Exit
26. Spring links
27.Spring links
28. Cover or armoured deck
29. Cover or armoured deck
30. Post
31. Post
32. Entrance pinion
33. Entrance pinion
34. Exit pinion
35.Exit pinion
36. Foot
37. Intermediate mechanism
38. Belt
39. Belt
40. Shock absorbers
41. Shock absorbers
42. Entrance pinion
43. Entrance pinion
44. Entrance
45. Exit
46. Fourth guide bar
47. Exit pinion
48. Exit pinion
49. Spring links
50. Spring links
51. Covers or armoured decks
52. Covers or armoured decks
53. Feeder

## Claims

1. Animal skinning machine of the type that comprises a feeder (65) of animals (14) to be skinned and a skin remover device (20) **characterized in that** it includes an initial separating mechanism (1) of the tail (15) of the animal to be skinned and:
- a rotor (10) separator, formed by:
■ a base (2),
■ a central axis (3), as a support,
■ at least two projections (4) elastic and/or flexible, equidistant to each other, shared in common to the referred base (2), and
■ at least two fins (5), positioned in the existing free spaces between said projections (4), and simultaneously shared in common to the base (2),
- a first guide bar (6), parallel or with a certain degree of parallelism with respect to the mentioned central axis (3), and in the side where the animals will run (14) to be skinned,
- a second guide bar (7), shared in common to a hinged arm-support (8) inferiorly, with a return spring (13), positioned said second guide bar (7) in the lateral and in the side where the animals will run (14) to be skinned, and to a predetermined distance of the rotor (10), said distance being sufficient for the entrance of the animal (14) to be skinned, and
- a motor (9) or means for driving the rotor (10) separator.

2. Machine according to claim 1 **characterized in that** the direction of rotation of the axis-support (3) is opposed to the side where the animals will run (14) to be skinned.

3. Machine according to claim 1 or 2 **characterized in that** it incorporates a third guide bar (11), protector of the referred motor (9).

4. Machine according to claim 1 or 3 **characterized in that** the form of mentioned second guide bar (7) depends on the lateral silhouette of the rotor (10) to which this guide bar outlines.

5. Machine according to claim 1 or 4 **characterized in that** the first lateral bar (6) is shared in common to the rotor (10).

6. Machine according to claim 1 or 2 or 4 **characterized in that** the motor (9) or means for driving the rotor are joined to said rotor (10) in the side opposed to the one of the entrance of the animal (14) to be skinned.

7. Machine according to claim 1 **characterized in that** the referred projections (4) are interchangeable.

8. Machine according to claim 1 or 7 **characterized in that** the projections (4) have spiral form.

9. Machine according to claim 1 or 7 **characterized in that** the projections (4) are formed by a succession of rings around the axis of the projection.

10. Machine according to claim 1 **characterized in that** the mentioned fins (5) are interchangeable.

11. Machine according to some of the claims from the claim 1 to the claim 10 **characterized in that** it incorporates at least one lateral cover or armoured deck (12).

12. Machine according to claim 11 **characterized in that** at least the rotor (10) and the set formed by the second guide bar (7) and the arm-support (8) are joined to a same cover or armoured deck (12).

13. Machine according to some of the previous claims **characterized in that** the skin remover device (20) consists of a mechanism of double toothed belts (21,22), both belts in contact to each other during at least one part of its route, such that they form in one of their ends an entrance (27) and in the other end an exit (28), said belts (21,22) driven by a unique driving means (23) that drives only one of the belts (21) and moves the other belt (22) by the existing mutual gear between both toothed belts in a part of the route of the same ones.

14. Machine according to claim 13 **characterized in that** the referred driving means (23) is a motor.

15. Machine according to claim 13 or 14 **characterized in that** it incorporates shock absorbers (25,26).

16. Machine according to claim 13 or 14 or 15 **characterized in that** the route that keeps in contact both belts (21,22) to each other starts at the entrance (27), flanked by a pair of pinions (35,36), one by belt, that later goes downwardly and reaches a point where said belts (21,22) change of direction, and starting again upwardly until the exit (28), also flanked by other two pinions (37,38), one by belt.

17. Machine according to claim 13 or 14 or 15 or 16 **characterized in that** it incorporates spring links (29,30) of the belts (21,22).

18. Machine according to at least one of the claims from claim 13 to claim 17 **characterized in that** it incorporates two lateral covers or armoured decks (31,32).

19. Machine according to claim 18 **characterized in that** it incorporates feet 24,39 shared in common to posts (33,34), simultaneously shared in common to one of the two covers or armoured decks (31).

20. Machine according to claim 19 **characterized in that** the mentioned posts (33,34) are vertically adjustable.

21. Machine according to at least one of the previous claims 13 to 20 **characterized in that** between the free end of the central axis (3) and the entrance (27) has been arranged an intermediate mechanism (40), that consists of a mechanism of double toothed belt (41,42), both belts in contact to each other during at least one part of their route, in which they configure in one of their ends an entrance (47) and an exit (48), said belts (41,42) being driven by driving means.

22. Machine according to claim 21 **characterized in that** the referred intermediate mechanism (40) incorporates, flanking the referred entrance (47), a pair of pinions (45,46), one by belt, and flanking the referred exit (48) another pair of pinions (50,51), one by belt.

23. Machine according to claim 22 **characterized in that** the referred pinions (36,35) that flank the entrance (27) of the skin remover device (20), are joined to the pinions (50,51), respectively, that flank the exit (48) of the intermediate mechanism (40), by means of intermediate axes, in such a way that the movement of the pinions (36,35) is transmitted to the pinions (50,51) and the belts are put into operation (41,42).

24. Machine according to claim 23 **characterized in that** the driving means (23) are the one that drives the belts of the intermediate mechanism (40).

25. Machine according to claim 23 or 24 **characterized in that** it incorporates shock absorbers (43,44).

26. Machine according to claim 23 or 24 or 25 **characterized in that** it incorporates spring links (52,53) of the belts (41,42).

27. Machine according to at least one of the claims from the claim 23 to the claim 26 **characterized in that** the belts (21,22) pertaining to the skin remover device (20) are wider than the belts (41,42) of the intermediate mechanism (40).

28. Machine according to claim 27 **characterized in that** close to the exit (48) a fourth guide bar has been arranged (49), that pushes the body of the animal (14) that is being skinned towards the outside, in order to adapt it to the width of the belts of the skin remover device (20), while the tail (15) follows captured between the belts (21,22,41,42).

29. Machine according to at least one of the claims from claim 21 to claim 28 **characterized in that** it incorporates two lateral covers or armoured decks (12,54).

30. Machine according to claim 29 **characterized in that** the initial separating mechanism (1) and the intermediate mechanism (40) share at least one of the covers or armoured decks (12).

31. Machine according to at least one of the previous claims 13 to 30 **characterized in that** the belts (21,22,41,42) are made in a polymer with steel threads in their inside.

32. Machine according to claim 31 **characterized in that** the referred polymer is nylon.

## Patentansprüche

1. Tierenthäutungseinrichtung mit einer Zuführvorrichtung (65) für zu enthäutende Tiere (14) sowie einer Hautentnahmevorrichtung (20), **dadurch gekennzeichnet, dass** sie einen Anfangstrennmechanismus (1) für den Schwanz (15) des zu enthäutenden Tieres sowie:
- eine Trennvorrichtung mit Rotor (10) aus:
■ einer Basis (2),
■ einer Mittelachse (3) als Träger,
■ zumindest zwei elastische und/oder flexible Vorsprünge (4) mit gleichem Abstand voneinander, die auch ein Bestandteil der Basis (2) bilden, sowie
■ zumindest zwei Rippen (5), die in dem vorhandenen freien Raum zwischen den Vorsprüngen (4) positioniert sind und gleichzeitig auch Bestandteil der Basis (2) sind,
- eine erste Führungsstange (6), die parallel oder zu einem bestimmten Grad parallel zur genannten Mittelachse (3) verläuft und an der Seite, an der die zu enthäutenden Tiere (14) laufen, angeordnet ist,
- eine zweite Führungsstange (7), die auch Bestandteil eines weiter unten angebrachten Gelenkarmträgers (8) ist, mit einer Rückzugsfeder (13), wobei die zweite Führungsstange (7) seitlich und an der Seite, an der die zu enthäutenden Tiere (14) laufen, sowie in einem vorgegebenen Abstand vom Rotor (10) angeordnet ist, wobei der Abstand groß genug für den Einlauf des zu enthäutenden Tieres (14) ist,
- einen Motor (9) oder Mittel zum Antrieb der Trennvorrichtung mit Rotor (10) aufweist.

2. Einrichtung nach Anspruch 1, **dadurch gekennzeichnet, dass** die Drehrichtung des Achsenträgers (3) der Seite gegenüber liegt, an der die zu enthäutenden Tiere (14) laufen.

3. Einrichtung nach Anspruch 1 oder 2, **dadurch gekennzeichnet, dass** sie eine dritte Führungsstange (11) aufweist, die als Schutz für den genannten Motor (9) dient.

4. Einrichtung nach Anspruch 1 oder 3, **dadurch gekennzeichnet, dass** die Form der genannten zweiten Führungsstange (7) von der seitlichen Silhouette des Rotors (10) abhängt, die durch diese Führungsstange umrissen wird.

5. Einrichtung nach Anspruch 1 oder 4, **dadurch gekennzeichnet, dass** die erste seitliche Stange (6) auch Bestandteil des Rotors (10) ist.

6. Einrichtung nach Anspruch 1, 2 oder 4, **dadurch gekennzeichnet, dass** der Motor (9) bzw. die Mittel zum Antrieb des Rotors mit dem Rotor (10) an der dem Einlauf der zu enthäutenden Tiere (14) gegenüber liegenden Seite verbunden sind.

7. Einrichtung nach Anspruch 1, **dadurch gekennzeichnet, dass** die genannten Vorsprünge (4) auswechselbar sind.

8. Einrichtung nach Anspruch 1 oder 7, **dadurch gekennzeichnet, dass** die Vorsprünge (4) Spiralform aufweisen.

9. Einrichtung nach Anspruch 1 oder 7, **dadurch gekennzeichnet, dass** die Vorsprünge (4) durch aufeinander folgende Ringe um die Achse des Vorsprungs gebildet werden.

10. Einrichtung nach Anspruch 1, **dadurch gekennzeichnet, dass** die genannten Rippen (5) auswechselbar sind.

11. Einrichtung nach Anspruch 1 bis 10, **dadurch gekennzeichnet, dass** sie zumindest eine seitliche Abdeckung oder Stahldeckplatte (12) aufweist.

12. Einrichtung nach Anspruch 11, **dadurch gekennzeichnet, dass** zumindest der Rotor (10) und der Aufbau aus zweiter Führungsstange (7) und Armträger (8) mit der gleichen Abdeckung bzw. Stahldeckplatte (12) verbunden sind.

13. Einrichtung nach einen oder mehreren der vorhergehenden Ansprüche, **dadurch gekennzeichnet, dass** die Hautentnahmevorrichtung (20) aus einem Mechanismus mit Doppelzahnriemen (21, 22) besteht, wobei sich beide Riemen zumindest während eines Teils ihres Verfahrwegs berühren, so dass sie an einem ihrer Enden einen Eingang (27) und am anderen Ende einen Ausgang (28) bilden, wobei die Riemen (21, 22) durch ein einziges Antriebsmittel (23) angetrieben werden, durch das nur einer der Riemen (21) angetrieben und der andere Riemen (22) durch das vorhandene gegenseitige Getriebe zwischen beiden Zahnriemen auf einem Teil des Verfahrwegs desselben bewegt wird.

14. Einrichtung nach Anspruch 13, **dadurch gekennzeichnet, dass** es sich bei dem genannten Antriebsmittel (23) um einen Motor handelt.

15. Einrichtung nach Anspruch 13 oder 14, **dadurch gekennzeichnet, dass** sie Stoßdämpfer (25, 26) enthält.

16. Einrichtung nach Anspruch 13, 14 oder 15, **dadurch gekennzeichnet, dass** der Verfahrweg, aufgrund dessen sich beide Riemen (21, 22) berühren, am Eingang (27) beginnt, der durch ein Paar Ritzel (35, 36), jeweils eines pro Riemen, flankiert ist, anschließend nach unten läuft und einen Punkt erreicht, an dem die Riemen (21, 22) ihre Richtung ändern, und dann wieder bis zum Ausgang (28) nach oben läuft, der ebenfalls durch weitere zwei Ritzel (37, 38), jeweils eines pro Riemen, flankiert ist.

17. Einrichtung nach Anspruch 13, 14, 15 oder 16, **dadurch gekennzeichnet, dass** sie Federverbindungen (29, 30) der Riemen (21, 22) aufweist.

18. Einrichtung nach mindestens einem der Ansprüche 13 bis 17, **dadurch gekennzeichnet, dass** sie zwei seitliche Abdeckungen bzw. Stahldeckplatten (31, 32) aufweist

19. Einrichtung nach Anspruch 18, **dadurch gekennzeichnet, dass** sie Füße (24, 39) aufweist, die auch Bestandteil von Pfosten (33, 34) sind, die gleichzeitig auch Bestandteil einer der zwei Abdeckungen bzw. Stahldeckplatten (31) sind.

20. Einrichtung nach Anspruch 19, **dadurch gekennzeichnet, dass** die genannten Pfosten (33, 34) höhenverstellbar sind.

21. Einrichtung nach mindestens einem der vorhergehenden Ansprüche 13 bis 20, **dadurch gekennzeichnet, dass** zwischen dem freien Ende der Mittelachse (3) und dem Eingang (27) ein Zwischenmechanismus (40) angeordnet ist, der aus einem Mechanismus mit Doppelzahnriemen (41, 42) besteht, wobei sich beide Riemen zumindest während eines Teils des Verfahrwegs berühren, bei dem sie an einem ihrer Enden einen Eingang (47) und einen Ausgang (48) bilden, wobei die Riemen durch Antriebmittel (41, 42) angetrieben werden.

22. Einrichtung nach Anspruch 21, **dadurch gekennzeichnet, dass** der genannte Zwischenmechanismus (40) ein Paar Ritzel (45, 46), jeweils eines pro Riemen, die den genannten Eingang (47) flankieren, sowie ein weiteres Paar Ritzel (50, 51) aufweist, jeweils eines pro Riemen aufweist, die den genannten Ausgang (48) flankieren.

23. Einrichtung nach Anspruch 22, **dadurch gekennzeichnet, dass** die genannten Ritzel (35, 36), die den Eingang (27) der Hautentnahmevorrichtung (20) flankieren, jeweils mit den Ritzeln (50, 51) verbunden sind, die den Ausgang (48) des Zwischenmechanismus (40) über Zwischenachsen flankieren, so dass die Bewegung der Ritzel (35, 36) an die Ritzel (50, 51) übertragen wird und die Riemen (41. 42) in Gang gesetzt werden.

24. Einrichtung nach Anspruch 23, **dadurch gekennzeichnet, dass** die Antriebsmittel (23) die Riemen des Zwischenmechanismus (40) antreiben.

25. Einrichtung nach Anspruch 23 oder 24, **dadurch gekennzeichnet, dass** sie Stoßdämpfer (43, 44) aufweist.

26. Einrichtung nach Anspruch 23, 24 oder 25, **dadurch gekennzeichnet, dass** sie Federverbindungen (52, 53) der Riemen (41, 42) aufweist.

27. Einrichtung nach mindestens einem der Ansprüche 23 bis 26, **dadurch gekennzeichnet, dass** die Riemen (21, 22), die zur Hautentnahmevorrichtung (20) gehören, breiter sind als die Riemen (41, 42) des Zwischenmechanismus (40).

28. Einrichtung nach Anspruch 27, **dadurch gekennzeichnet, dass** nahe des Ausgangs (48) eine vierte Führungsstange (49) angeordnet ist, die den Körper des zu enthäutenden Tieres (14) nach außen schiebt, damit es an die Breite der Riemen der Hautentnahmevorrichtung (20) angepasst wird, während der Schwanz (15) zwischen den Riemen (21, 22, 41, 42) festgehalten wird und folgt.

29. Einrichtung nach mindestens einem der Ansprüche 21 bis 28, **dadurch gekennzeichnet, dass** sie zwei seitliche Abdeckungen bzw. Stahldeckplatten (12, 54) aufweist.

30. Einrichtung nach Anspruch 29, **dadurch gekennzeichnet, dass** der Anfangstrennmechanismus (1) und der Zwischenmechanismus (40) auch Bestandteil zumindest einer der Abdeckungen oder Stahldeckplatten (12) sind.

31. Einrichtung nach mindestens einem der vorhergehenden Ansprüche 13 bis 30, **dadurch gekennzeichnet, dass** die Riemen (21, 22, 41, 42) aus einem Polymer mit Stahlgewinde im Innern bestehen.

32. Einrichtung nach Anspruch 31, **dadurch gekennzeichnet, dass** es sich bei dem genannten Polymer um Nylon handelt.

## Revendications

1. Installation pour écorcher les animaux du type incorporant un rail à transporter (65) les animaux (14) devant être écorchés et un dispositif de dépouillage (20) **caractérisée en ce qu'**elle incorpore un mécanisme initial de séparation (1) de la queue (15) de l'animal à écorcher et:
- un rotor (10) séparateur, composé de:
• une base (2),
• un axe central (3), servant de support,
• au moins deux pièces saillantes coniques (4) élastiques et/ou souples, équidistantes entre elles et partagées en commun jusqu'à la base à laquelle il est fait référence (2), et
• au moins deux ailettes (5), situées dans les espaces libres existant entre ces pièces saillantes coniques (4) et simultanément partagées en commun jusqu'à la base (2).
- une première glissière de guidage (6), parallèle ou relativement parallèle par rapport à l'axe central auquel il est fait référence (3), et du côté par lequel arrivent les animaux (14) à écorcher,
- une deuxième glissière de guidage (7), partagée en commun jusqu'à un bras de support à charnière (8) en partie inférieure, avec un ressort de rappel (13), la deuxième glissière de guidage (7) étant située latéralement et du côté par lequel arrivent les animaux (14) à écorcher, et à distance prédéfinie du rotor (10), cette distance étant suffisante pour que l'animal (14) à écorcher puisse entrer, et
- un moteur (9) ou moyen de commande du rotor (10) séparateur.

2. Machine selon la revendication 1 **caractérisée en ce que** la direction de rotation de l'axe support (3) est à l'opposé du côté par lequel arrivent les animaux (14) à écorcher.

3. Machine selon la revendication 1 ou 2 **caractérisée en ce qu'**elle incorpore une troisième glissière de guidage (11), protégeant le moteur auquel il est fait référence (9).

4. Machine selon la revendication 1 ou 3 **caractérisée en ce que** la forme de cette deuxième glissière de guidage (7) dépend de la silhouette latérale du rotor (10) dont cette glissière de guidage suit la ligne.

5. Machine selon la revendication 1 ou 4 **caractérisée en ce que** la première barre latérale (6) est partagée en commun jusqu'au rotor (10).

6. Machine selon la revendication 1 ou 2 ou 4 **caractérisée en ce que** le moteur (9) ou dispositif de commande du rotor est uni à ce rotor (10) du côté opposé à celui par lequel entre l'animal (14) à écorcher.

7. Machine selon la revendication 1 **caractérisée en ce que** les pièces saillantes coniques auxquelles il est fait référence (4) sont interchangeables.

8. Machine selon la revendication 1 ou 7 **caractérisée en ce que** les pièces saillantes coniques (4) ont une forme de spirale.

9. Machine selon la revendication 1 ou 7 **caractérisée en ce que** les pièces saillantes coniques (4) se composent d'une suite d'anneaux autour de l'axe de la pièce saillante conique.

10. Machine selon la revendication 1 **caractérisée en ce que** les ailettes auxquelles il est fait référence (5) sont interchangeables.

11. Machine selon certaines des revendications de 1 à 10 **caractérisée en ce qu'**elle incorpore au moins un couvercle latéral ou capot blindé (12).

12. Machine selon la revendication 11 **caractérisée en ce qu'**au moins le rotor (10) et le jeu composé de la deuxième glissière de guidage (7) et du bras de support (8) sont unis à un même couvercle ou capot blindé (12).

13. Machine selon certaines des revendications précédentes **caractérisée en ce que** le dispositif de dépouillage (20) est un mécanisme à deux courroies dentées (21, 22), les deux courroies étant en contact entre elles pendant au moins une partie de leur parcours, de telle façon qu'à l'une de leurs extrémités elles forment une entrée (27) et à l'autre extrémité une sortie (28), les courroies (21, 22) étant entraînées par un seul dispositif de commande (23) qui entraîne une seule des courroies (21) et fait avancer l'autre courroie (22) au moyen de l'engrenage commun présent entre les deux courroies dentées sur une partie de leur parcours.

14. Machine selon la revendication 13 **caractérisée en ce que** le dispositif d'entraînement auquel il est fait référence (23) est un moteur.

15. Machine selon la revendication 13 ou 14 **caractérisée en ce qu'**elle incorpore des amortisseurs de choc (25, 26).

16. Machine selon la revendication 13 ou 14 ou 15 **caractérisée en ce que** le parcours, pendant lequel les deux courroies (21, 22) sont en contact, commence à l'entrée (27), encadrée de deux pignons (35, 36), un par courroie, qu'il descend ensuite pour arriver à un point où ces courroies (21, 22) changent de direction et qu'il commence à remonter jusqu'à la sortie (28), encadrée également de deux pignons (37, 38), un par courroie.

17. Machine selon la revendication 13 ou 14 ou 15 ou 16 **caractérisée en ce qu'**elle incorpore des monte-ressorts (29, 30) des courroies (21, 22).

18. Machine selon au moins l'une des revendications de 13 à 17 **caractérisée en ce qu'**elle incorpore deux couvercles latéraux ou capots blindés (31, 32).

19. Machine selon la revendication 18 **caractérisée en ce qu'**elle incorpore des pattes (24, 39) partagées en commun jusqu'aux supports (33, 34), partagés simultanément en commun jusqu'à l'un des deux panneaux ou capots blindés (31).

20. Machine selon la revendication 19 **caractérisée en ce que** ces supports (33, 34) sont réglables verticalement.

21. Machine selon au moins l'une des revendications précédentes 13 à 20 **caractérisée en ce qu'**entre l'extrémité libre de l'axe central (3) et l'entrée (27), un mécanisme intermédiaire (40) a été inséré, ce mécanisme étant à double courroie dentée (41, 42), les deux courroies étant en contact entre elles pendant au moins une partie de leurs parcours pendant lequel elles ont à l'une de leurs extrémités une entrée (47) et une sortie (48), ces courroies (41, 42) étant entraînées par un dispositif de commande.

22. Machine selon la revendication 21 **caractérisée en ce que** le mécanisme intermédiaire auquel il est fait référence (40) incorpore deux pignons (45, 46), un par courroie, encadrant cette entrée (47), et deux autres pignons (50, 51), un par courroie, encadrant cette sortie (48).

23. Machine selon la revendication 22 **caractérisée en ce que** les pignons auxquels il est fait référence (36, 35), encadrant l'entrée (27) du dispositif de dépouillage (20), sont unis aux pignons (50, 51) respectivement, qui encadrent la sortie (48) du mécanisme intermédiaire (40) au moyen d'axes intermédiaires, de telle façon que le mouvement des pignons (36, 35) est transmis aux pignons (50, 51) et entraîne les courroies (41, 42).

24. Machine selon la revendication 23 **caractérisée en ce que** le dispositif de commande (23) est celui qui entraîne les courroies du mécanisme intermédiaire (40).

25. Machine selon la revendication 23 ou 24 **caractérisée en ce qu'**elle incorpore des amortisseurs de choc (43, 44).

26. Machine selon la revendication 23 ou 24 **caractérisée en ce qu'**elle incorpore des monte-ressorts (52, 53) des courroies (41, 42).

27. Machine selon au moins l'une des revendications 23 à 26 **caractérisée en ce que** les courroies (21, 22) qui appartiennent au dispositif de dépouillage (20) sont plus larges que les courroies (41, 42) du mécanisme intermédiaire (40).

28. Machine selon la revendication 27 **caractérisée en ce qu'**une quatrième glissière de guidage a été insérée (49) près de la sortie (48) pour pousser le corps de l'animal (14) à dépouiller vers l'extérieur, afin de l'adapter à la largeur des courroies du dispositif de dépouillage (20) alors que la queue (15) est toujours prise dans les courroies (21, 22, 41, 42).

29. Machine selon au moins l'une des revendications de 21 à 28 **caractérisée en ce qu'**elle incorpore deux couvercles latéraux ou capots blindés (12, 54).

30. Machine selon la revendication 29 **caractérisée en ce que** le mécanisme de séparation initiale (1) et le mécanisme intermédiaire (40) partagent au moins l'un des panneaux ou capots blindés (12).

31. Machine selon au moins l'une des revendications précédentes 13 à 30 **caractérisée en ce que** les courroies (21, 22, 41, 42) sont en polymère avec des fils d'acier à l'intérieur.

32. Machine selon la revendication 31 **caractérisée en ce que** le polymère auquel il est fait référence est du nylon.
